(19)

**Europäisches Patentamt**
**European Patent Office**
**Office européen des brevets**

(11) **EP 1 920 877 B1**

(12) **EUROPÄISCHE PATENTSCHRIFT**

(45) Veröffentlichungstag und Bekanntmachung des Hinweises auf die Patenterteilung:
**24.02.2010 Patentblatt 2010/08**

(51) Int Cl.:
**B23Q 1/52** (2006.01)

(21) Anmeldenummer: **07018449.4**

(22) Anmeldetag: **20.09.2007**

(54) **Schwenkbare Werkzeugschlittenanordnung**

Tiltable tool carriage assembly

Agencement de chariot porte-outil inclinable

(84) Benannte Vertragsstaaten:
**DE FR GB IT**

(30) Priorität: **10.11.2006 DE 202006017178 U**

(43) Veröffentlichungstag der Anmeldung:
**14.05.2008 Patentblatt 2008/20**

(73) Patentinhaber: **Thielenhaus Technologies GmbH**
**42285 Wuppertal (DE)**

(72) Erfinder:
• **Steinwender, Holger**
**42289 Wuppertal (DE)**

• **Lupp, Martin**
**45144 Essen (DE)**

(74) Vertreter: **Albrecht, Rainer Harald et al**
**Andrejewski - Honke**
**Patent- und Rechtsanwälte**
**P.O. Box 10 02 54**
**45002 Essen (DE)**

(56) Entgegenhaltungen:
**EP-A- 1 693 148     EP-A- 1 815 940**
**CH-A5- 692 010**

**Beschreibung**

Die Erfindung betrifft eine Werkzeugschlittenanordnung mit einer Grundplatte, einem mit der Grundplatte verbundenen Träger, einem auf dem Träger axial geführten Schlitten und einem auf dem Träger angeordneten Vorschubantrieb für den Schlitten, wobei zwischen der Grundplatte und dem Träger Einstellmittel vorgesehen sind, um den Träger gegenüber der Grundplatte in zwei zueinander senkrechten Richtungen zu verstellen. Die Werkzeugschlittenanordnung wird als Teil einer Werkzeugmaschine genutzt, wobei ein Bearbeitungswerkzeug auf dem axial geführten Schlitten angeordnet und die Werkzeugschlittenanordnung mit der Grundplatte an einem Maschinenaufbau der Werkzeugmaschine befestigt wird. Die Einstellmittel erlauben dabei eine genaue Ausrichtung der Vorschubachse von Schlitten und Werkzeug. Die Werkzeugschlittenanordnung ist im besonderen Maße für eine Werkzeugmaschine zur spanenden Finishbearbeitung von Werkstücken geeignet.

Eine Werkzeugschlittenanordnung mit den eingangs beschriebenen Merkmalen ist aus der Praxis bekannt, wobei für die Justage in den beiden zueinander senkrechten Richtungen x, y Stellschrauben vorgesehen sind. Die Einstellungen werden solange korrigiert, bis sich an der bearbeiteten Werkstückfläche ein gewünschtes Schliffbild einstellt. Eine genaue Einstellung ist schwierig und zeitaufwendig, da die Stellschrauben nur schwer zugänglich sind und die beiden zueinander senkrechten Richtungen x und y nicht voneinander unabhängig eingestellt werden können.

EP-1 815 940-A (Art. 54(3) EPÜ) offenbart eine Werkzeugschlittenanordnung, wobei zwei zueinander senkrechte Drehlager für jeweils eine Schwenkbewegung des Trägers vorgesehen sind.

Vor diesem Hintergrund liegt der Erfindung die Aufgabe zugrunde, eine Werkzeugschlittenanordnung mit den eingangs beschriebenen Merkmalen anzugeben, die auf einfache Weise eine genaue Ausrichtung der Vorschubachse ermöglicht, wobei insbesondere die zueinander senkrechten Richtungen x, y weitgehend unabhängig voneinander einstellbar sein sollen.

Ausgehend von einer Werkzeugschlittenanordnung mit den eingangs beschriebenen Merkmalen wird die Aufgabe erfindungsgemäß dadurch gelöst, dass der Träger mit der Grundplatte durch ein Lager verbunden ist, welches eine Schwenkbewegung des Trägers um eine zur Schlittenachse orthogonale Schwenkachse und eine zur Schwenkbewegung orthogonale Tiltbewegung zulässt, und dass eine Exzenterverstelleinrichtung als Einstellmittel für die Tiltbewegung vorgesehen ist, die einen im Träger oder in der Grundplatte gelagerten Verstellexzenter sowie eine den Träger mit der Grundplatte verbindende federbelastete Klemmeinrichtung umfasst. Unter Tiltbewegung wird eine Kippbewegung senkrecht zur Schwenkbewegung verstanden. Da die Schwenkbewegung und die Tiltbewegung orthogonal zueinander sowie orthogonal zu der Schlittenachse des axial geführten Schlittens sind, ist eine exakte Einstellung möglich, wobei die Einstellbewegungen weitgehend unabhängig voneinander sind. Der erfindungsgemäße Einsatz einer Exzenterverstelleinrichtung ermöglicht dabei eine besonders einfache und gleichzeitig genaue Einstellung der Tiltbewegung. Eine Drehung des Verstellexzenters erfolgt gegen die Federkraft der Klemmeinrichtung, so dass eine weitgehend spielfreie Justage gewährleistet ist.

Das Lager, welches die Schwenkbewegung und die Tiltbewegung zulässt, ist im Vergleich zu den typischen Stellwegen in einem großen Abstand zu der Exzenterverstelleinrichtung und dem Einstellmittel für die Schwenkbewegung angeordnet, so dass die Feineinstellung der Schlittenachse nur in einem kleinen Winkelbereich vorgesehen ist. Das Lager ist in einer bevorzugten Ausgestaltung der Erfindung mit einem Lagerzapfen zwischen der Grundplatte und dem Träger angeordnet, wobei der Lagerzapfen in der Grundplatte fest eingesetzt ist und unter Zwischenschaltung eines Federpaketes an den Träger angeschlossen ist. Die Zwischenschaltung des Federpaketes gewährleistet eine für die Tiltbewegung ausreichende Beweglichkeit des Lagers, wobei aufgrund der Federkraft gleichzeitig eine spielfreie Bewegung des Lagers bei einer Einstellbewegung gewährleistet ist.

In einer bevorzugten Ausgestaltung der Erfindung ist als Einstellmittel für die Schwenkbewegung des Trägers eine Spindelverstelleinrichtung vorgesehen, die eine im Träger oder in der Grundplatte gelagerte Spindel sowie einen auf der Spindel angeordneten Mitnehmer aufweist, wobei der Mitnehmer in einer Ausnehmung der Grundplatte bzw. des Trägers eingreift und Tiltbewegungen des Trägers relativ zur Grundplatte zulässt. Die Spindel ist zweckmäßigerweise derart in dem Träger bzw. der Grundplatte gelagert, dass ein Ende oder vorzugsweise beide Enden der Spindel von außen zugänglich sind. Die Spindel kann an dem zugänglichen Ende bzw. den zugänglichen Enden eine Aufnahme für ein Verstellwerkzeug, beispielsweise einen Schraubenzieher oder einen Inbusschlüssel, aufweisen. Im Rahmen der Erfindung kann jedoch auch zur Gewährleistung einer besonders leichten Einstellung der Schwenkbewegung die Anordnung eines Handrades an zumindest einem Ende der Spindel vorgesehen sein.

In einer bevorzugten Ausgestaltung der Erfindung ist der Verstellexzenter mit einer Exzenterwelle in dem Träger bzw. der Grundplatte gelagert, wobei auch zweckmäßigerweise ein Ende, vorzugsweise beide Enden der Exzenterwelle von außen zugänglich sind. Wie bei der Spindel können zur Gewährleistung einer möglichst einfachen Einstellbarkeit an zumindest einem Ende der Exzenterwelle eine Aufnahme für ein Verstellwerkzeug oder ein Handrad angeordnet sein.

Die Ausgestaltung des Verstellexzenters richtet sich nach dem gewünschten Stellbereich für die Tiltbewegung. Gemäß einer bevorzugten Ausgestaltung der Erfindung wird die Außenkontur des Verstellexzenters so festgelegt, dass der durch die Einstellung des Verstellexzenters bestimmte Abstand zwischen der Grundplatte und dem Träger sich linear mit dem Drehwinkel des Verstellexzenters ändert. In Bezug auf den Drehpunkt des Verstellexzenters ist der Verstellexzenter im Stellbereich als archimedische Spirale ausgebildet, wobei sich ausgehend von dem geringsten Abstand $a_0$ zwischen Träger und Grundplatte der Abstand a aus dem Produkt von einem Steigungsfaktor m und dem Drehwinkel φ ergibt. Es gilt:

$$a = a_0 + m \cdot \varphi.$$

Im Rahmen einer alternativen Ausgestaltung der Erfindung ist vorgesehen, dass der Verstellexzenter im Stellbereich abhängig von dem Drehwinkel Teilbereiche unterschiedlicher Steigung aufweist. Durch eine solche Ausgestaltung ist in Bereichen mit geringer Steigung eine besonders feine Einstellung möglich, wobei insgesamt durch die Teilbereiche mit einer großen Steigung auch ein großer Verstellweg ermöglicht werden kann. Um ein Verdrehen des Verstellexzenters lediglich in dem vorgegebenen Stellbereich zu ermöglichen, können Anschläge vorgesehen sein, welche die Drehbewegung des Verstellexzenters begrenzen.

Der Vorschubantrieb kann im Rahmen der Erfindung beispielsweise eine drehbar an dem Träger gelagerte Vorschubspindel aufweisen, die mit einer Spindelaufnahme des Schlittens zusammenwirkt, wobei die Drehung der Spindel mittels eines Antriebsmotors eine axiale Zustellbewegung des Schlittens bewirkt.

Im Folgenden wird die Erfindung anhand einer lediglich ein Ausführungsbeispiel darstellenden Zeichnung erläutert. Es zeigen schematisch:

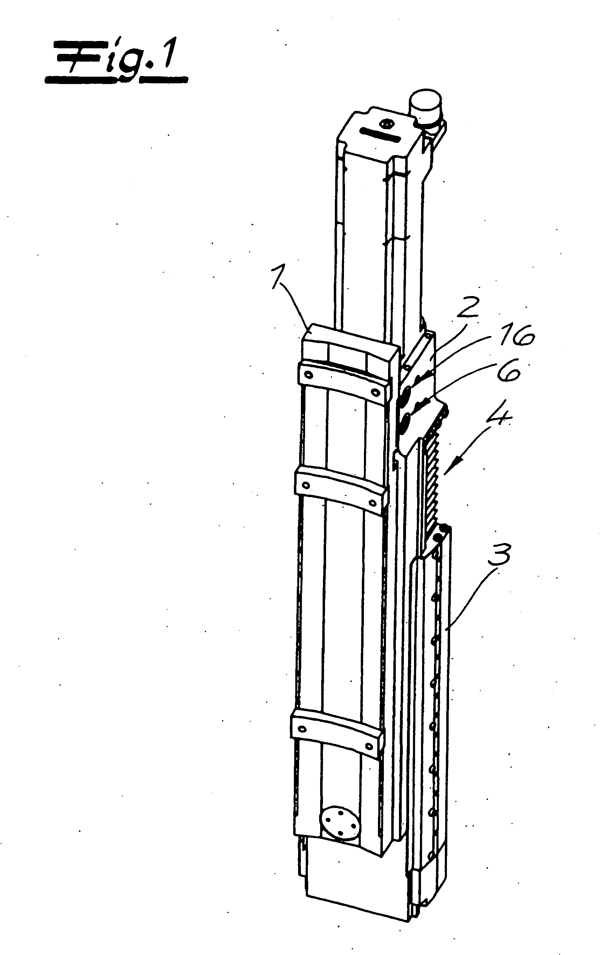

Fig. 1      eine perspektivische Seitenansicht einer erfindungsgemäßen Werkzeugschlittenanordnung;

Fig. 2      die Werkzeugschlittenanordnung gemäß Fig. 1 in einer Ansicht von vorne;

Fig. 3      ein Längsschnitt entlang der Linie A-A der Fig. 2;

Fig. 4      eine Schnittdarstellung entlang der Linie B-B der Fig. 2;

Fig. 5      eine Schnittdarstellung entlang der Linie C-C der Fig. 2;

Fig. 6      eine Schnittdarstellung entlang der Linie D-D der Fig. 2;

Fig. 7a und b      alternative Ausgestaltungen eines Verstellexzenters.

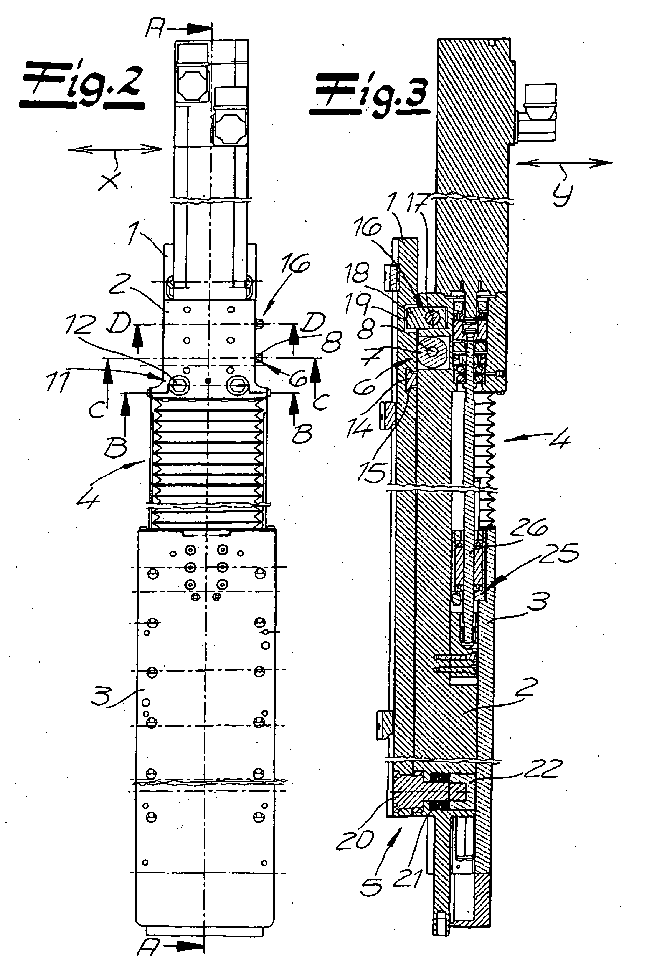

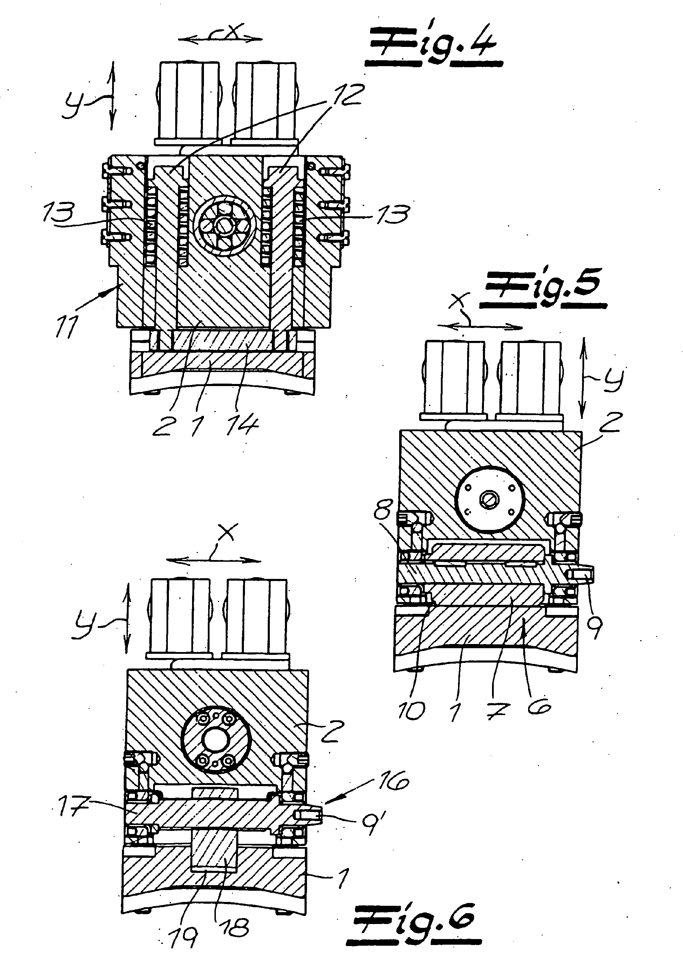

Zum grundsätzlichen Aufbau der in den Figuren dargestellten Werkzeugschlittenanordnung gehören eine Grundplatte 1, ein mit der Grundplatte 1 verbundener Träger 2, ein auf dem Träger 2 axial geführter Schlitten 3 sowie ein Vorschubantrieb 4 für den Schlitten. Die Werkzeugschlittenanordnung wird für eine Werkzeugmaschine genutzt, wobei die Grundplatte an einem Maschinenaufbau befestigt wird und ein Bearbeitungswerkzeug, beispielsweise eine Schleif-, Bohr- oder Frässpindel, auf dem Schlitten angeordnet wird. Dem Längsschnitt der Fig. 3 ist zu entnehmen, dass der Träger 2 mit der Grundplatte 1 durch ein Lager 5 verbunden ist, welches eine Schwenkbewegung des Trägers 2 um eine zur Schlittenachse orthogonale Schwenkachse in Richtung x und eine zur Schwenkbewegung orthogonale Tiltbewegung (Kippbewegung) in Richtung y zulässt. Als Einstellmittel für die Tiltbewegung ist eine Exzenterverstelleinrichtung 6 mit einem Verstellexzenter 7 vorgesehen, wobei der Verstellexzenter 7 mit einer Exzenterwelle 8 in der Grundplatte 1 oder dem Träger 2 gelagert ist. Fig. 5 zeigt einen Schnitt im Bereich der Exzenterverstelleinrichtung 6 entlang der Linie C-C der Fig. 2. Der Verstellexzenter 7 ist mit der Exzenterwelle 8 bei der dargestellten Ausführung in dem Träger 2 gelagert, wobei die Exzenterwelle 8 an ihren beiden Enden von außen zugänglich ist. Die Exzenterwelle weist an einem ihrer Enden eine Aufnahme 9 für ein Verstellwerkzeug auf, wobei ohne Einschränkung auch eine entsprechende Aufnahme oder auch ein Handrad an beiden Enden der Exzenterwelle 8 vorgesehen sein kann. An den axialen Enden des Verstellexzenters 7 für die Tiltbewegung sind Anschrägungen 10 vorgesehen, so dass der Verstellexzenter 7 bei einer Schwenkbewegung leicht auf der Grundplatte 1 gleiten kann. Zur Verbesserung der Gleiteigenschaften können auch Gleitbeschichtungen oder besonders gleitarme Materialkombinationen von Grundplatte 1 und Verstellexzenter 7 vorgesehen sein. Bei einer Drehung des Verstellexzenters 7 wird der Abstand zwischen Grundplatte 1 und Träger 2 bei der Tiltbewegung gegen die Kraft einer federbelasteten Klemmeinrichtung 11 verstellt. Der Aufbau der Klemmeinrichtung 11 ist im Detail der Fig. 4 zu entnehmen, wobei die Fig. 4 eine Schnittdarstellung entlang der Linie B-B der Fig. 2 zeigt. Die Klemmeinrichtung 11 weist zwei Schrauben 12 auf, die Federn 13 durchgreifen und endseitig in ein T-förmiges Gegenstück 14 eingeschraubt sind. Das T-förmige Gegenstück 14 ist, wie in Fig. 3 dargestellt, in einer entsprechend geformten Nut 15 der Grundplatte 1 nach der Art einer Schwalbenschwanzführung eingelegt, wobei das T-förmige Gegenstück 14 bei einer Schwenkbewegung in der zugeordneten Nut 15 in Richtung x gleiten kann.

Als Einstellmittel für die Schwenkbewegung des Trägers 2 gegenüber der Grundplatte 1 ist eine Spindelverstelleinrichtung 16 vorgesehen. Die Spindelverstelleinrichtung 16 ist in Fig. 6, die einen Schnitt entlang der Linie D-D der Fig. 2 zeigt, im Detail dargestellt. Die Spindelverstelleinrichtung 16 weist eine im Träger 2 gelagerte Spindel 17 sowie einen auf der Spindel 17 angeordneten Mitnehmer 18 auf, wobei der Mitnehmer 18 in einer Ausnehmung 19 der Grundplatte 1 eingreift. Die Spindel 17 ist derart in dem Träger 2 gelagert, dass wie auch bei der Exzenterwelle 8 beide Enden der Spindel 17 von außen zugänglich sind. An einem Ende der Spindel 17 ist dabei eine Aufnahme 9' für ein Verstellwerkzeug vorgesehen. Bei einer Drehung der Spindel 17 wird der Mitnehmer 18 in Richtung x bewegt und auf diese Weise der Träger 2 relativ zur Grundplatte 1 um die Schwenkachse verschwenkt. Zwischen dem Mitnehmer 18 und der Grundplatte 1 verbleibt dabei in y-Richtung ein Spalt, so dass die Spindelverstelleinrichtung 16 auch eine Tiltbewegung zulässt. Sowohl die Spindel 17 der Spindelverstelleinrichtung 16 als auch die Exzenterwelle 8 sind sehr gut zugänglich, so dass auf einfache Weise eine genaue Einstellung der weitgehend voneinander unabhängigen Schwenkbewegung einerseits und Tiltbewegung andererseits möglich ist.

Das Lager 5 zwischen der Grundplatte 1 und dem Träger 2 weist einen Lagerzapfen 20 auf, der in die Grundplatte 1 fest eingesetzt ist und unter Zwischenschaltung eines Federpaketes 21 an den Träger 2 angeschlossen ist. Der Lagerzapfen 20 ist dabei unter Spannung des Federpaketes 21 in eine Gegenmutter 22 eingeschraubt. Das dargestellte Lager 5 ermöglicht sowohl eine Schwenkbewegung als auch eine Tiltbewegung, wobei aufgrund der Federkraft des Federpaketes 21 des Lagers 5 und der Federkraft der Federn 13 der Klemmeinrichtung 11 eine weitgehend spielfreie Ausrichtung der Schlittenachse ermöglicht wird.

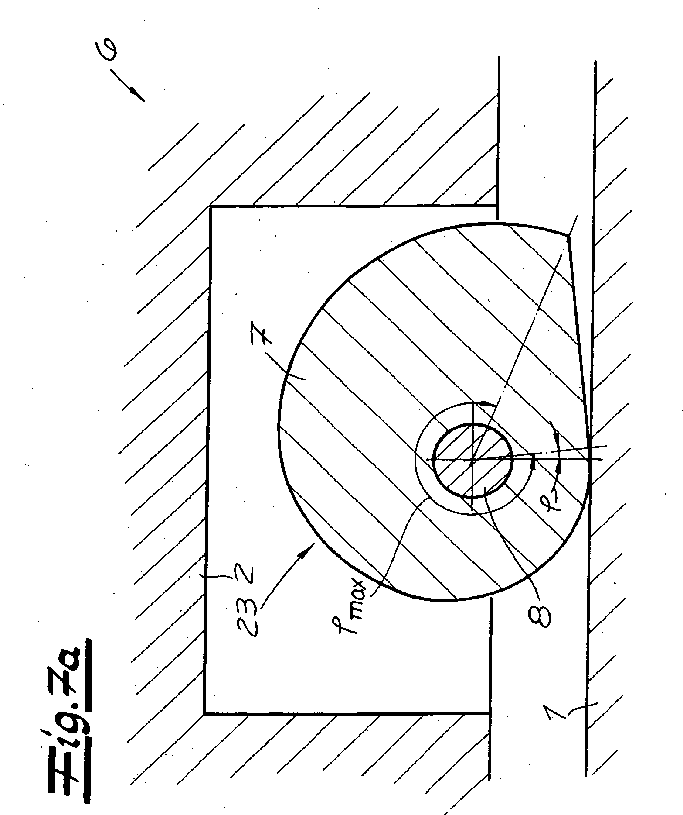

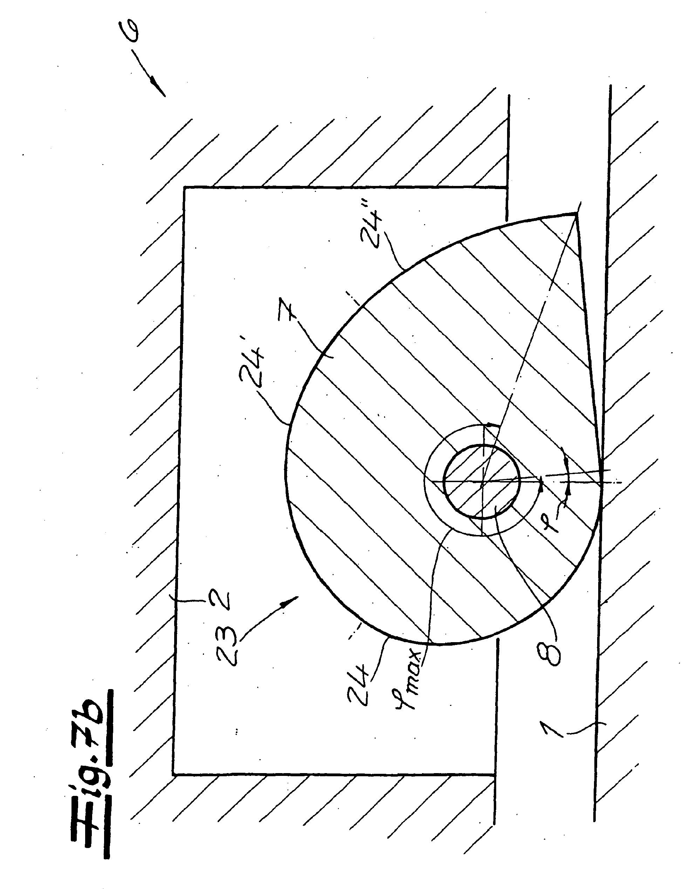

Der Verstellweg für die Tiltbewegung ist durch die Form des Verstellexzenters 7 vorgegeben. Bevorzugte Ausgestaltungen der Kontur des Verstellexzenters 7 sind in Fig. 7a und Fig. 7b dargestellt, wobei der Stellbereich 23 des Verstellexzenters 7 einen maximalen Stellwinkel $\varphi_{max}$ von etwa 300° aufweist. Zu Beginn des Stellbereiches 23, also bei einem kleinen Stellwinkel, ist der Abstand zwischen Träger 2 und Grundplatte 1 gering. Am Ende des Stellbereiches 23 ist der Abstand zwischen der Trägerplatte 2 und der Grundplatte 1 maximal. Fig. 7a zeigt eine bevorzugte Ausgestaltung, bei der in dem Stellbereich 23 des Verstellexzenters 7 der Abstand zwischen der Grundplatte 1 und dem Träger 2 eine lineare Funktion des Drehwinkels $\varphi$ ist. Die Kontur des Verstellexzenters 6 ist im Stellbereich 23 als archimedische Spirale ausgebildet, wobei die Änderung des Abstandes sich aus der Multiplikation des Drehwinkels $\varphi$ mit einem Steigungsfaktor ergibt. Die dargestellte Ausgestaltung gewährleistet über den gesamten Stellbereich 23 eine gleichbleibend feine Einstellbarkeit der Tiltbewegung. Fig. 7b zeigt eine alternative Ausgestaltung, bei der der Verstellexzenter 7 in dem Verstellbereich 23 abhängig von dem Drehwinkel $\varphi$ Teilbereiche 24, 24', 24" unterschiedlicher Steigung aufweist. So sind zu Beginn und am Ende des Verstellbereiches 23, Teilbereiche 24, 24" mit einer vergleichsweise großen Steigung und dazwischen ein Teilbereich 24' mit einer geringen Steigung vorgesehen. In dem mittleren Teilereich 24', der üblicherweise zur Justage ausreichend ist, ist eine besonders feine Verstellung möglich, wobei durch die größere Steigung in den angrenzenden Teilbereichen 24, 24" auch insgesamt ein großer Verstellweg ermöglicht wird.

Der Schlitten 3 für die Aufnahme eines Werkzeuges ist gleitend auf dem Träger 2 angeordnet, wobei zum Vortrieb des Schlittens eine drehbar an dem Träger 2 gelagerte und in eine Aufnahme 25 des Schlittens 3 eingreifende Vorschubspindel 26 vorgesehen ist. Durch eine Drehung der Vorschubspindel 26 wird dabei der Schlitten 3 in axialer Richtung angetrieben.

**Patentansprüche**

1. Werkzeugschlittenanordnung mit
   einer Grundplatte (1),
   einem mit der Grundplatte (1) verbundenen Träger (2),
   einem auf dem Träger (2) axial geführten Schlitten (3) und
   einem auf dem Träger (2) angeordneten Vorschubantrieb (4) für den Schlitten (3),
   wobei zwischen der Grundplatte (1) und dem Träger (2) Einstellmittel vorgesehen sind, um den Träger (2) gegenüber der Grundplatte (1) in zwei zueinander senkrechten Richtungen (x, y) zu verstellen, und wobei der Träger (2) mit der Grundplatte (1) durch ein Lager (5) verbunden ist, welches eine Schwenkbewegung des Trägers (2) um eine zur Schlittenachse orthogonale Schwenkachse und eine zur Schwenkbewegung orthogonale Tiltbewegung zulässt, und eine Exzenterverstelleinrichtung (6) als Einstellmittel für die Tiltbewegung vorgesehen ist, die einen im Träger (2) oder in der Grundplatte (1) gelagerten Verstellexzenter (7) sowie einen den Träger (2) mit der Grundplatte (1) verbindende federbelastete Klemmeinrichtung (11) umfasst.

2. Werkzeugschlittenanordnung nach Anspruch 1, **dadurch gekennzeichnet, dass** als Einstellmittel für Schwenkbewegungen des Trägers (2) eine Spindelverstelleinrichtung (16) vorgesehen ist, die eine im Träger (2) oder in der Grundplatte (1) gelagerte Spindel (17) sowie einen auf der Spindel (17) angeordneten Mitnehmer (18) aufweist, wobei der Mitnehmer (18) in eine Ausnehmung (19) der Grundplatte (1) bzw. des Trägers (2) eingreift und Tiltbewegungen des Trägers (2) relativ zur Grundplatte (1) zulässt.

3. Werkzeugschlittenanordnung nach Anspruch 2, **dadurch gekennzeichnet, dass** die Spindel (17) derart im Träger (2) bzw. der Grundplatte (1) gelagert ist, dass beide Enden der Spindel (17) von außen zugänglich sind.

**4.** Werkzeugschlittenanordnung nach einem der Ansprüche 1 bis 3, **dadurch gekennzeichnet, dass** das Lager (5) zwischen der Grundplatte (1) und dem Träger (2) einen Lagerzapfen (20) aufweist, der in die Grundplatte (1) fest eingesetzt ist und unter Zwischenschaltung eines Federpaketes (21) an den Träger (2) angeschlossen ist.

**5.** Werkzeugschlittenanordnung nach einem der Ansprüche 1 bis 4, **dadurch gekennzeichnet, dass** in einem Stellbereich (23) des Verstellexzenters (7) der Abstand zwischen Grundplatte (1) und Träger (2) eine lineare Funktion des Drehwinkels ($\varphi$) des Verstellexzenters (7) ist.

**6.** Werkzeugschlittenanordnung nach einem der Ansprüche 1 bis 4, **dadurch gekennzeichnet, dass** der Verstellexzenter (7) in einem Stellbereich (23) abhängig von dem Drehwinkel ($\varphi$) Teilbereiche (24, 24', 24") unterschiedlicher Steigung aufweist.

**7.** Werkzeugschlittenanordnung nach einem der Ansprüche 1 bis 6, **dadurch gekennzeichnet, dass** der Verstellexzenter (7) mit einer Exzenterwelle (8) in dem Träger (2) bzw. der Grundplatte (1) gelagert ist.

**8.** Werkzeugschlittenanordnung nach Anspruch 7, **dadurch gekennzeichnet, dass** die Exzenterwelle (8) derart im Träger (2) bzw. in der Grundplatte (1) gelagert ist, dass beide Enden der Exzenterwelle (8) von außen zugänglich sind.

**9.** Werkzeugschlittenanordnung nach einem der Ansprüche 1 bis 8, **dadurch gekennzeichnet, dass** der Vorschubantrieb (4) eine drehbar an dem Träger (2) gelagerte Vorschubspindel (26) aufweist.

**Claims**

**1.** Tool carriage assembly with
a baseplate (1),
a carrier (2) connected to the baseplate (1), a carriage (3) axially guided on the carrier (2) and
a feed drive (4) for the carriage (3) arranged on the carrier (2),
wherein adjustment means are provided between the baseplate (1) and the carrier (2), in order to adjust the carrier (2) in two mutually perpendicular directions (x, y) with respect to the baseplate (1), wherein the carrier (2) is connected to the baseplate (1) by means of a bearing (5) which allows a pivoting movement of the carrier (2) about a pivot axis which is orthogonal to the carriage axis and a tilting movement which is orthogonal to the pivoting movement, and wherein an eccentric adjustment device (6) is provided as an adjustment means for the tilting movement, which eccentric adjustment device comprises an adjustment eccentric (7) mounted in the carrier (2) or in the baseplate (1) as well as a spring-loaded clamping device (11) which connects the carrier (2) to the baseplate (1).

**2.** Tool carriage assembly according to Claim 1, **characterised in that** a spindle adjustment device (16) is provided as an adjustment means for pivoting movements of the carrier (2), which spindle adjustment device has a spindle (17) mounted in the carrier (2) or in the baseplate (1) as well as a catch (18) arranged on the spindle (17), wherein the catch (18) engages into a recess (19) of the baseplate (1) or the carrier (2) and allows tilting movements of the carrier (2) relatively to the baseplate (1).

**3.** Tool carriage assembly according to Claim 2, **characterised in that** the spindle (17) is mounted in the carrier (2) or the baseplate (1) in such a manner that both ends of the spindle (17) can be accessed from the outside.

**4.** Tool carriage assembly according to one of Claims 1 to 3, **characterised in that** the bearing (5) has a bearing journal (20) between the baseplate (1) and the carrier (2), which bearing journal is fixedly inserted into the baseplate (1) and is attached to the carrier (2) with the intermediate connection of a spring assembly (21).

**5.** Tool carriage assembly according to one of Claims 1 to 4, **characterised in that** the distance between the baseplate (1) and carrier (2) in an adjustment region (23) of the adjustment eccentric (7) is a linear function of the angle of rotation ($\varphi$) of the adjustment eccentric (7).

**6.** Tool carriage assembly according to one of the Claims 1 to 4, **characterised in that** in an adjustment region (23), the adjustment eccentric (7) has part regions (24, 24', 24") of different slope as a function of the angle of rotation ($\varphi$).

**7.** Tool carriage assembly according to one of Claims 1 to 6, **characterised in that** the adjustment eccentric (7) is mounted in the carrier (2) or the baseplate (1) with an eccentric shaft (8).

**8.** Tool carriage arrangement according to Claim 7, **characterised in that** the eccentric shaft (8) is mounted in the carrier (2) or in the baseplate (1) in such a manner that both ends of the eccentric shaft (8) can be accessed from the outside.

**9.** Tool carriage assembly according to one of Claims 1 to 8, **characterised in that** the feed drive (4) has a feed spindle (26) mounted rotatably on the carrier (2).

## Revendications

1. Dispositif de chariot porte-outil comportant une plaque de base (1), un support (2) relié à la plaque de base (1), un chariot (3) guidé axialement sur le support (2) et un entraînement d'avance (4) destiné au chariot (3) disposé sur le support (2), dans lequel entre la plaque de base (1) et le support (2) des moyens de réglage sont prévus, afin de régler le support (2) par rapport à la plaque de base (1) dans deux directions (x,y) perpendiculaires l'une à l'autre, le support (2) est relié à la plaque de base (1) par l'intermédiaire d'un palier (5), lequel autorise un mouvement de pivotement du support (2) autour d'un axe de pivotement orthogonal par rapport à l'axe du chariot et un mouvement d'inclinaison orthogonal par rapport au mouvement de pivotement, et un dispositif de réglage à excentrique (6) est prévu comme moyen de réglage du mouvement d'inclinaison, lequel comprend un excentrique de réglage (7) positionné dans le support (2) ou dans la plaque de base (1) ainsi qu'un dispositif de serrage (11) chargé par ressort reliant le support (2) à la plaque de base (1).

2. Dispositif de chariot porte-outil selon la revendication 1, **caractérisé en ce que** comme moyen de réglage des mouvements de pivotement du support (2) un dispositif de réglage à broche (16) est prévu, lequel présente une broche (17) positionnée dans le support (2) ou dans la plaque de base (1) ainsi qu'un doigt d'entraînement (18) disposé sur la broche (17), dans lequel le doigt d'entraînement (18) s'engage dans une cavité (19) de la plaque de base (1), resp. du support (2) et autorise les mouvements d'inclinaison du support (2) relativement à la plaque de base (1).

3. Dispositif de chariot porte-outil selon la revendication 2, **caractérisé en ce que** la broche (17) est positionnée dans le support (2), resp. dans la plaque de base (1), de telle sorte que les deux extrémités de la broche (17) soient accessibles de l'extérieur.

4. Dispositif de chariot porte-outil selon une des revendications 1 à 3, **caractérisé en ce que** le palier (6) présente entre la plaque de base (1) et le support (2) un tourillon (20), qui est solidement enfoncé dans la plaque de base (1) et est raccordé au support (2) en intercalant un groupe de ressorts (21).

5. Dispositif de chariot porte-outil selon une des revendications 1 à 4, **caractérisé en ce que** dans une zone de réglage (23) de l'excentrique de réglage (7) l'espacement entre la plaque de base (1) et le support (2) est une fonction linéaire de l'angle de rotation ($\varphi$) de l'excentrique de réglage (7).

6. Dispositif de chariot porte-outil selon une des revendications 1 à 4, **caractérisé en ce que** l'excentrique de réglage (7) dans une zone de réglage (23) présente en fonction de l'angle de rotation ($\varphi$) des zones partielles (24,24',24") d'élévation différente.

7. Dispositif de chariot porte-outil selon une des revendications 1 à 6, **caractérisé en ce que** l'excentrique de réglage (7) est positionné avec un arbre d'excentrique (8) dans le support (2), resp. dans la plaque de base (1).

8. Dispositif de chariot porte-outil selon la revendication 7, **caractérisé en ce que** l'arbre d'excentrique (8) est positionné dans le support (2), resp. dans la plaque de base (1) de telle sorte que les deux extrémités de l'arbre d'excentrique (8) soient accessibles de l'extérieur.

9. Dispositif de chariot porte-outil selon une des revendications 1 à 8, **caractérisé en ce que** l'entraînement d'avance (4) présente une broche d'avance (26) positionnée rotativement sur le support (2).

Fig.1

EP 1 920 877 B1

*Fig.2*

*Fig.3*

8

Fig.4

Fig.5

Fig.6

**Fig.7a**

Fig.7b

$q_{max}$

23  2

24'

7

24

24"

$q$

1

8

EP 1 920 877 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1815940 A